## Europäisches Patentamt

## European Patent Office

## Office européen des brevets

(19)

(11) Publication number: **0 068 099**
**B1**

(12) **EUROPEAN PATENT SPECIFICATION**

(45) Date of publication of patent specification: **01.02.89**

(51) Int. Cl.⁴: **G 06 F 11/00, G 06 F 12/02**

(21) Application number: **82103553.2**

(22) Date of filing: **27.04.82**

(54) **Fault tolerant machine/human interface unit.**

(30) Priority: **18.06.81 US 274916**

(43) Date of publication of application:
**05.01.83 Bulletin 83/01**

(45) Publication of the grant of the patent:
**01.02.89 Bulletin 89/05**

(84) Designated Contracting States:
**DE FR GB IT**

(56) References cited:
**GB-A-2 064 432**
**US-A-4 064 558**

**PROCEEDINGS OF THE IEE, vol. 125, no. 6,
June 1978, pages 606-610, Stevenage, GB;
J.L.E. BALDWIN: "Recording pal signals in
digital form"**

(73) Proprietor: **International Business Machines
Corporation
Old Orchard Road
Armonk, N.Y. 10504 (US)**

(72) Inventor: **Lambiotte, Joseph Clayton
6996 Sweet Water Ct.
Boulder Colorado 80301 (US)**
Inventor: **Lankford, Larry Gene
4770 Hancock Dr.
Boulder Colorado 80303 (US)**

(74) Representative: **Grant, Iain Murray
IBM United Kingdom Limited Intellectual
Property Department Hursley Park
Winchester Hampshire SO21 2JN (GB)**

## Description

The present invention relates to fault tolerant machine/human interface units and provides, in such an interface unit, a non-coded data buffer to output mapping which scatters errors due to grouped defects in the buffer throughout the output so that, quite apart from any corrective measures taken, a degraded but human usable output can be obtained despite quite extensive buffer error. Such a scattered mapping can be referred to as 'randomisation' but it must be remembered that it must be repeatable and will provide little or no tolerance where coded data is involved. The justification is mainly statistical and depends on

(i) the tendency of buffer faults to group themselves;

(ii) the expectation that a single piece of human data (a character) will correspond to a hundred or more non-coded machine data elements; and

(iii) the relative insensitivity of the human eye/brain.

It is noted that, in larger data processing configurations with multiple main memory units (BOM's), it not uncommon to distribute system addresses throughout the individual BOM's to minimize conflict for access to any particular BOM and it is also known to locate each bit of a word in a different BOM so that, in combination with an SEC/DED code mechanism, the loss of one complete BOM can be accommodated in the presence of no other error. The problem that the present invention tackles is not that solved by either of these arrangements.

In the production of memory devices, especially semiconductor types, the yield is never 100%. That is, there are some devices (chips) that are imperfect. The cause and number of errors are varied. Usually, however, the errors show some contiguity resulting from the nature of the defect that causes the errors. For example, a defective area in the substrate of a memory chip will cause the data at the storage locations in the area to be erroneously stored and retrieved. Some errors may be caused by the failure of address lines. These errors will also be related to a contiguous or periodic sequence of addresses.

For data processing and scientific problem solving, it is essential that memory integrity be maintained. The failure of only one bit in such applications creates unacceptable errors of undesired magnitudes. Other uses of memory systems, however, are more tolerant of occasional errors. Among such uses is the storage of pels, picture elements, that are each represented by binary numbers. A pel in some cases is black or white permitting its value to be represented by a single binary digit, or bit. When pels are represented in varying degrees of gray levels, more than one bit is necessary to represent each pel. In the following discussion and description, it is assumed that a pel is either black or white, i.e., represented by one bit, but the remarks apply equally to those systems in which a pel is multivalued.

Pels are used in data transmission of documents, e.g. facsimile machines, in which a document to be transmitted is scanned by photo-optics at some given resolution, measured in pels per square inch, and the luminosity is converted to a digital signal which is sent to a receiver that reproduces the scanned image by any one of several methods. Receivers can be implemented with ink jet, laser scan, heat-sensitive paper with an electric stylus, electrophotostatic, and so on. In addition to facsimile machines, the scanning and reproducing techniques can be used in copy machines.

The use of storage between the scanner and the printer provides the advantages of using different speed devices for the scanner and the printer and permits the production of several copies without having to scan the original document for each copy.

The finer the pel resolution, the more memory required to store a page but the less degradation produced by an incorrect pel. Since high quality document reproduction requires high resolution, a large memory is required but the resulting system is more tolerant of occasional errors. It is, therefore, desirable and possible to use less than perfect memory devices in such systems to reduce the memory cost and to improve the usable yield of the memory devices.

Many approaches have been tried in coping with the problems caused by defective memory locations. Most of the approaches have been the detection and correction of memory errors and have adopted some of the techniques used in the communication art. Early machines used parity checks, 2-out-of-5 codes, and other such coding for detecting errors. A 2-out-of-5 coding example is the bi-quinary code used in the IBM Model 650.

Error correction techniques use Hamming codes, multiple parity checks, and redundant coding such as the Viterbi coding technique. Hamming codes were described in terms of distance, i.e., the number of bits that could be in error in a word without the word being incorrectly decoded. A distance of one, for example, means that if a single bit is erroneous, the word remains valid. An example is the use of 0 0 0 to represent 0 and 1 1 1 to represent 1. Multiple parity checks divide the word into conjoint subsets with a parity check for each set. The parity checks are then arranged so that the errors can be encoded to denote the erroneous bit which can then be corrected. Redundant coding includes sending or storing the same word three (or more) times and using a majority voting scheme to determine the valid word. Combinations of these techniques are often used.

Other techniques for coping with defective memory locations include the use of a content-addressable memory for storing the locations of bad memory locations and producing a substitute address (see U.S. Patent 3,234,521).

When using semiconductor memory devices, partially good chips are combined to use the good parts of each to produce an error-free memory.

Ways of accomplishing such combinations are described in IBM Technical Disclosure Bulletins, Vol. 20, No. 5, Oct. 1977, pp 1841—1842, and vol. 21, No. 9, Feb. 1979, pp 3582—3583.

If at most only one bit in a word may be defective, the technique described in U.S. Patent No. 3768071 is useful. The word, including a complementary bit, is stored with a parity bit and immediately read out. If there is no parity error, the word is considered to be correctly stored. If there is a parity error, the entire word is complemented and stored again. The complementary bit indicates that the word is complemented. As words are read out of the memory, their complementary bit is checked. If it indicates that there was no complementation, the word is used as retrieved. If it indicates that the word was complemented, the word is complemented before it is used.

These and other techniques have been developed to permit using a defective memory while maintaining data integrity. This reduces the cost of memory systems by improving the yield, i.e., the number of usable units in a production batch. These techniques are useful where, as described above, memory integrity must be maintained.

The use of defective memory devices in fault tolerant systems has not been as well developed and no references have been found directed to the subject matter. In a fault tolerant system such as that described above, the occasional erroneous bit is not noticeable. In defects which affect a large number of contiguous locations, however, the effect would be noticeable such as by producing a large white area in a black designated area or vice versa. Because of the technologies involved, such grouped errors seem to be predominant. It is to this situation that the invention is directed.

Additional background art is supplied by U.S. Patents 3,585,586 (facsimile signals encoded to channel burst errors in random errors), 4,006,467 (organisation of memory having adjacent bad bits so each word has only one bad bit which is then corrected), and 4,041,453 (multiplexed PCM signals coded so that only unitary pulse bits are lost in transmission permitting reconstruction by interpretation).

The present invention provides a machine/human interface unit for presenting machine generated data to a human user in the form of an array of machine data element representations recognisable by the human user only in groups thereof, the array being aggregated in a non-coded data buffer, whether or not the corresponding data is additionally stored in or for the unit in coded form, and transferred in its entirety to the human side of the interface in a fixed spatial relationship of the machine data elements, the spatial relationship of the machine data elements in the non-coded data buffer differing from that in the presented array in such a way that the neighbour data elements in the presented array are scattered spatially throughout the buffer whereby the effect of a malfunction of a locality of the buffer is correspondingly scattered over the presented array, contributing a small error to each of a plurality of human recognisable groups in the presented array.

A randomisation means may be included in the addressing means for supplying random sequences of addresses.

Provision may also be made for changing the value of the data, i.e., complementing the bits to and from the memory storage locations.

The arrangement eliminates the cumulative effects of contiguous memory defects by dispersing the contiguous errors over an entire page in a pseudo-random manner. This enables the use of a defective memory device that would otherwise not be usable because of the noticeable degradation of the copy reproduction for example.

This is to be distinguished from the arrangement of US—A—4,064,558 in which data is stored in a BEAMOS tube in blocks and a spare block location is maintained in the store into which the currently accessed block is transferred at a time determined by a random number generator in order to reduce data site fatigue.

The present invention will be described further by way of example with reference to the accompanying drawings in which:—

Fig. 1 is a block diagram of one form of interface unit of the invention;

Fig. 2 is a logic diagram of a three-stage pseudo-random generator.

Fig. 3 is a logic diagram of a 19-stage pseudo-random generator used in the system of Fig. 1;

Fig. 4 is a logic diagram of a selectable complementer for the output data coupled to the data bus;

Fig. 5 is a logic diagram of a controller suitable for use in the system of Fig. 1.

For the purposes of this disclosure, imperfect data includes bits or groups of bits that are incorrectly stored in or retrieved from a memory device. A fault-tolerant utilization means is understood to include devices or systems using data that functions acceptably even though the data is occasionally erroneous.

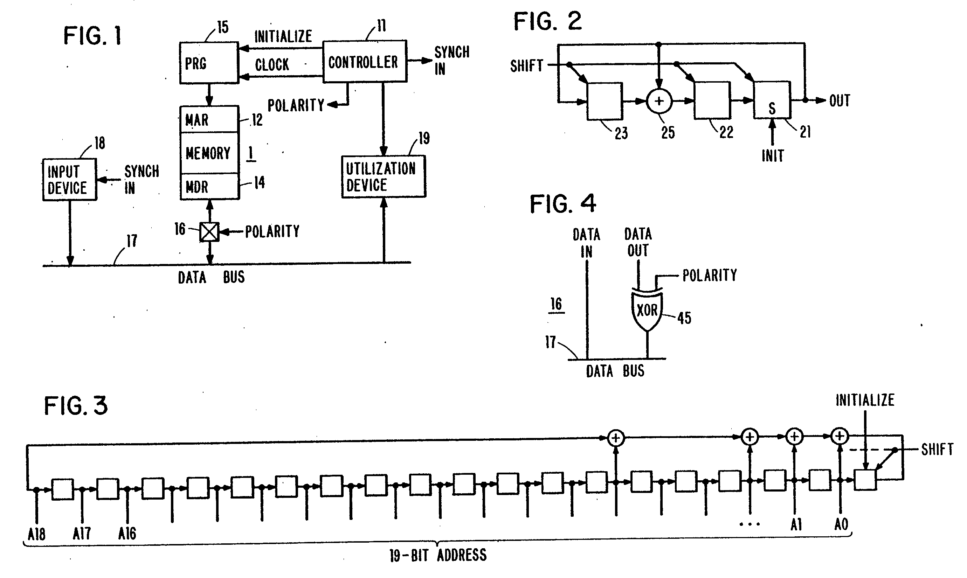

A system in which the invention can be used is shown in Fig. 1. A memory device 1 has a Memory Address Register (MAR) 12 and a Memory Data Register (MDR) 14. The MAR 12 receives address signals from a Pseudo-Random Generator (PRG) 15 and the data signals from the MDR 14 are coupled to a data bus 17. The MDR 14 also receives data signals from the data bus 17 when storing data.

Data is supplied to the system by an input device 18 which can be a scanner such as used in facsimile transmission or any other of several devices that are commercially available that can scan an input document and produce binary signals corresponding to the dark and light areas of the scanned document.

The data stored in the system is used on a utilization device 19 such as the receiver in a facsimile system, an ink jet printer, a laser printer, or any other output device that produces a white or black dot according to the binary value of the data.

The various components of the system are operated by a controller 11 which can be a discrete component sequential machine or an appropriately programmed microprocessor or microcomputer.

The system operates by scanning a document in the input device 18 which produces a sequence of binary signals corresponding to the lightness or darkness of the area being scanned. The binary data so produced is stored in locations within the memory 1 as determined by the output signals from the PRG 15. When the document has been completely scanned, the data is then retrieved from the memory 1 in the same order in which it was stored and supplied to the utilization device 19 which reproduces the dark light areas to produce a duplicate of the scanned original document. The system can be a facsimile transmission system with added storage which has the advantages of coupling input and output devices of varying speeds and of producing as many copies as desired without the need to scan the original for each copy.

The polarity device 16 shown in Fig. 1 will be described in the detailed explanation below.

The pseudo-random generator 15 of Fig. 1 will be described in detail with references to Figs. 2 and 3. The PRG 15 can be either a maximum-length PRG or a fixed length PRG. The type to be discussed for illustrative purposes is the well known shift register type described in detail in Appendix A, of Peterson W. W. and Weldon E. J. Error Correcting Codes, 2nd Edition, MIT Press, 1972. Fig. 3 shows a maximum-length three stage PRG shift register. The maximum length of a nonrepeating binary sequence that can be generated by an m-stage PRG is $2'm-1$, where ' denotes that m is an exponent. Therefore, for three stages, the maximal length is seven. The $(-1)$ represents the absence of the zeros case. Assuming the first stage 21 is set by an initialization signal INIT, the output from the PRG is 1 from the first stage. An Exclusive-OR (XOR) gate 25, also known as a modulo-2 adder supplies the input signal to be shifted into the second stage 22. Since only the first stage 21 is set, the XOR gate 25 supplies a binary 1 to the second stage 22. After the succeeding shift pulse, the stage 23 is set by virtue of the shift of a binary 1 from the first stage 21, the second stage 22 is set by virtue of the binary 1 output signal from the XOR gate 25 which was shifted into it, and the first stage 21 is reset by virtue of the shift of the zero from the second stage 22. The output sequence from the first stage is therefore, 1 0 1 1 1 0 0 1 0 1 1 1 0 0 1 0 1 1 1 0 0 ..., which is the repeated sequence 1 0 1 1 1 0 0. The sequence is seen to consist of seven bits in a pseudo-random sequence, hence the name. The successive register values for the sequence are 0 0 1, 1 1 0, 0 1 1, 1 1 1, 1 0 1, 1 0 0, 0 1 0 in binary and 1, 6, 3, 7, 5, 4 and 2 in octal. It is seen that the 0 0 0 sequence does not occur. If it did, the subsequent output values would remain zero.

Not all feedback connections through XOR gates produce maximum length sequences. In the three stage case, the XOR gate 25 placed at the input to the first stage would produce a maximum length output but a different sequence, viz., 1 1 1 0 1 0 0, and the register values would be 1, 5, 7, 6, 3, 4, and 2. Putting an XOR gate at both places, however, produces the four bit sequence 1 1 0 0 and the register sequence of 1, 7, 4, and 3.

An appendix to Peterson and Weldon gives the feedback taps for values of m up to 100 and tables are available for greater values. The feedback taps are calculated by computing the irreducible polynomials for all combinations of binary values having m bits or by use of the z-transform.

For purposes of the ilustrated embodiment, a 19-bit PRG shown in Fig. 3 will be used. For purposes of illustration, it will be assumed that a maximum size document of 8-1/2×14 inches will be reproduced with a resolution of 240 pels per inch. (Pel is an acronym for picture element and is the smallest size of dot used to reproduce the documents). A square inch has, therefore, 57,600 pels and there are about 6.8 million pels required to store an entire page. It will be further assumed that the computer word is 16 bits, i.e., the MDR has 16 stages. Therefore, 428,400 words will be required in the memory. (The controller is assumed to have its own memory.) Therefore, a minimum of 19 address bits will be required. A total of 524,288 locations can be addressed with 19 bits so a maximum length generator will not be required.

Therefore, a PRG having a sequence less than its maximal length can be used. Alternatively, a maximal length PRG can be used, initializing its value so as to generate the number of addresses desired.

An additional consideration in the implementation of the PRG is that successive bits of the generator need not be successive bits of the address. Consequently, each m stage PRG can be seen to generate m! different address sequences since these m! address mappings are available. The logic for selecting which local mapping is in current use is direct and simple and is not described. Further mapping selection is a useful facility which need not be provided.

The errors in a given batch of memory devices are not randomly distributed because of the technology and type of defect which tends to make the erroneous bits predominantly ones or zeros. It is desirable to use the predominant error value to represent a white pel because approximately 90% of a normal page is white. Thus, the predominant error will be less likely to contrast with its surrounding area. Furthermore, white dots on a black background are not as perceptible as black dots on a white background. Therefore, it is desirable to provide the capability to complement the memory data so that the predominant error value represents a white pel.

The polarity switch 16 of Fig. 1, controlled by a polarity signal from the controller 11, is shown in detail in Fig. 4. The data-in from the data bus 17 to the MDR 14 (Fig. 1) is coupled directly but the data-out from the MDR to the data bus 17 is coupled through an XOR gate 45. There is, of course, a separate XOR gate for each bit, i.e., bus line. The other input to the XOR gate is the polarity signal. When the polarity signal is zero, the XOR gate passes the data bits without complementing. When the polarity signal is one, the XOR gate complements the data bits. That an XOR gate acts as a controllable complementer is well known in the art and apparent from a study of the truth table associated with XOR gates.

The polarity signal can be generated by the controller 11 of Fig. 1 by sampling all the data errors and setting the polarity signal according to which value predominates. That is, zeros are stored in all memory locations. All locations are then read and a count is kept of the number of bits that have the value of one. Then ones are stored in all memory locations and a count kept of all the zeros read out. If the ones count exceeds the zeros count and one indicates a black pel, the polarity signal is set to one. If the zeros count exceeds the ones count, the polarity signal is set to zero. If the one value indicates a white pel, the polarity signal is set the opposite from the above-described values. Alternately, the controller 11 can be provided with a switch input that is used to set the polarity value.

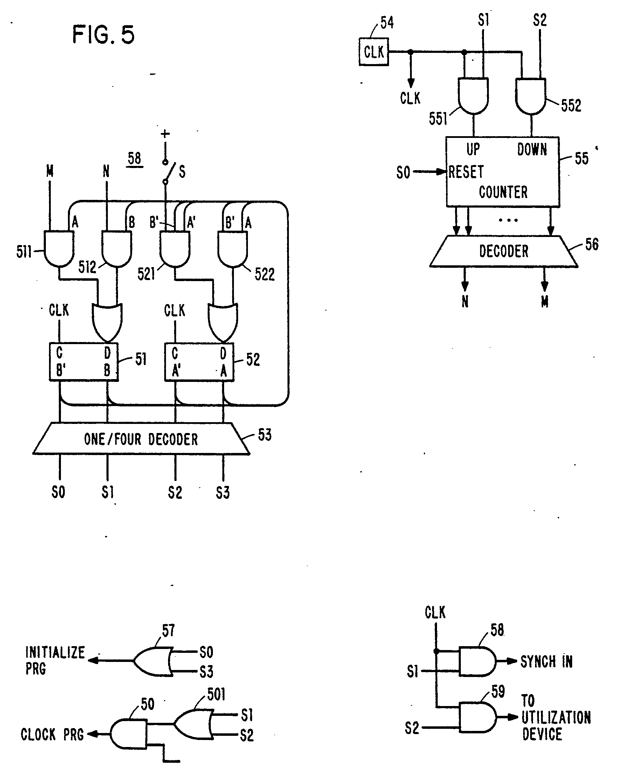

A controller suitable for use in the system of Fig. 1 is shown in detail in Fig. 5. The sequencing is controlled by two flip-flops 51 and 52, shown as implemented with D-type flip-flops. The flip-flop output signals are decoded by a one-out-of-four decoder 53 which supplies the state signals S0 through S3, depending on the states of the flip-flops 51 and 52.

A clock signal source 54 supplies the necessary timing signals which are coupled, inter alia, to an UP-DOWN counter 55 through a pair of AND gates 551 and 552. The output signals from the counter 55 are coupled to a decoder 56 which supplies two output signals, M and N. The signal N indicates that the counter value is not zero. The signal M indicates that the counter value is the number of locations in the memory used to store pels, e.g., 428,400 in the illustrative example, supra.

The controller is initially in the state S0, both of the flip-flops 51 and 52 being reset. The S0 output signal holds the counter 55 reset and supplies an initialization signal to the PRG address register (Fig. 3) through an OR gate 57. State S0 is, in effect, an idle state.

When an S switch 58 is closed, an enabling signal is supplied to an AND gate 521 which is primed by the reset output signals from the flip-flops 51 and 52. This causes the flip-flop 52 to be set by the next clock signal. Setting the flip-flop 52 disables the AND gate 521 and changes the state to S1. The flip-flop 52 is maintained in the set condition by each clock signal by virtue of the D-input signal supplied by an AND gate 522 which is enabled by the set state of the flip-flop 52 and the reset state of the flip-flop 51.

State S1 controls the input device 18 (Fig. 1) by the SYNCH IN signal supplied by an AND gate 58 which is primed by the S1 state signal and enabled by the clock signals. The AND gate 551 is also enabled by the S1 state signal, causing the counter 55 to count up. Also, the PRG address counter (Fig. 3) is clocked through its sequence of addresses by the output signal supplied by an AND gate 50 which is primed by the output signal from an OR gate 501 which is activated by the S1 state signal. The controller remains in state S1 until the counter value has reached M.

When the counter 55 has reached the count value of M, an AND gate 511 is enabled, being primed by the set output signal from the flip-flop 52. At the next clock signal, the flip-flop 51 is set. With both flip-flops 51 and 52 set, the controller enters state S3.

The state S3 is a transition state that reinitializes the PRG address counter via the OR gate 57. State S3 lasts for one clock interval. At the next clock pulse, the flip-flop 52 is reset, its D-input signal having been removed by the setting of the flip-flop 51 which disabled the AND gate 522. This causes the controller to enter the state S2.

State S2 controls the utilization device in a manner similar to that in which state S1 controlled the input device. The controlling clock signals are supplied to the utilization device through an AND gate 59 which is primed by the S2 state signal. The PRG, which was re-initialized for the output mode by the state signal S3, is clocked through the same sequence of addresses by the output signal from the AND gate 50 which is enabled by the output signal from the OR gate 501 which is now activated by the state signal S2. The counter 55, however, is counted down via the AND gate 552. As long as the counter value is not zero, the flip-flop 51 is maintained in the set state by successive clock signals by virtue of the D-input signal supplied by an AND gate 512 which is enabled by the set state of the flip-flop 51 and the N output signal from the counter decoder 56. When the counter 55 has counted to zero, the AND gate 512 is disabled and the flip-flop 51 is reset by the next clock pulse, causing the controller to return to the idle state S0.

The above-described sequence of events can then be repeated by activating the S switch 58. The polarity signal in this controller is supplied by a switch that is set by the operator. Although as described as a discrete controller, the sequence of events is usually more complicated than described herein for purposes of disclosing the invention. It is, therefore, more economical to substitute a program-controlled microprocessor for the controller.

The use of microprocessor-based controllers is widespread and is becoming more popular. The reason for the increasing popularity of the microprocessor based system as a controller is readily apparent from a consideration of its advantages, especially when compared to a hardware or unique device logic-based controller.

The latter requires a complicated design, even when aided by a computer, providing a separate state for each different control step. The complexity and difficulty of the design increase exponentially with respect to an increase in the number of states required. To design the most efficient controller is usually not even attempted because of the amount of effort required. The increase in controller efficiency is usually not sufficient to offset the additional design effort required. The final controller requires a large number of logic devices as well as complicated printed circuit boards for its implementation.

One such a hardwired controller is completed, it normally requires a certain amount of debugging which can use more than half the design time of a large controller. If the design is to be altered or expanded to include an unforeseen requirement or to add new features to the machine being controlled, it is almost impossible to modify the design, requiring instead a completely new design and construction effort.

Clearly, the hardwired approach is expensive in terms of the hardware, time, and resources required to reach the final product.

By contrast, the microprocessor-based system is more easily designed. The design approach requires predominantly a programming effort although a certain amount of hardware design is necessary for the auxiliary gating and driving circuits that interface the components of the controlled system with the microprocessor.

The final system is simply altered by changing or deleting program coding or by using different subroutines. Similarly, the system is readily expanded by adding new coding or new subroutines.

The resulting system is usually small in terms of the number of devices required, being no more than a single microcomputer chip in some instances. The substitution of programming effort for sequential machine design and the small number of required additional devices result in an inexpensive system. It is for these very considerations that the microprocessor was developed.

There are, of course some disadvantages to the use of microprocessor control systems. The control signal output and input signal processes are necessarily performed serially, although handled in a bit parallel manner. Usually, however, this *ad-seriatim* process is not too great a disadvantage because the microprocessor operates at a speed many magnitudes greater than that of the controlled machine. In fact, the microprocessor is used only for a small fraction of the total time during which the machine is operating. The stored program must be custom-made if stored in a read-only memory but the cost of such devices is decreasing and the price of large capacity, electrically programmable memory devices has come within the reach of even the hobbyist.

## Claims

1. A machine/human interface unit for presenting machine generated data to a human user in the form of an array of machine data element representations recognisable by the human user only in groups thereof, the array being aggregated in a non-coded data buffer (11), whether or not the corresponding data is additionally stored in or for the unit in coded form, and transferred in its entirety to the human side of the interface in a fixed spatial relationship of the machine data elements, the spatial relationship of the machine data elements in the non-coded data buffer differing from that in the presented array in such a way that the neighbour data elements in the presented array are scattered spatially throughout the buffer whereby the effect of a malfunction of a locality of the buffer is correspondingly scattered over the presented array, contributing a small error to each of a plurality of human recognisable groups in the presented array.

2. A unit as claimed in claim 1 wherein the buffer is a conventional word addressable store with its own address responsive access mechanism (12) rendered serial by word by means of an address generator (15) in the form of a pseudo-random number generator.

3. A unit as claimed in claim 2 wherein means are provided for selectively associating the output bit positions of the pseudo-random number generator with the input bit positions of the access mechanism.

4. A unit as claimed in any preceding claim wherein means (16) are provided, responsive to a mode control signal for inverting the output bits of the buffer.

## Patentansprüche

1. Maschinen/Mensch-Schnittstelleneinheit, um maschinengenerierte Daten einem menschlichen Benutzer in der Gestalt einer Matrix von Maschinendatenelementendarstellungen anzuzeigen, die vom menschlichen Benutzer nur in Gruppen von solchen erkennbar sind, bei der die Matrix in einem nicht verschlüsselten Datenpuffer (11) unabhängig davon zusammengefaßt ist, ob die entsprechenden Daten zusätzlich in oder für die Einheit in verschlüsselter Form gespeichert werden, und bei der die Matrix in ihrer Gesamtheit zur menschlichen Seite der Schnittstelle hin in einer bestimmten räumlichen Beziehung der Maschinendatenelemente übertragen wird, wobei die räumliche Beziehung der Maschinendatenelemente im nicht verschlüsselten Datenpuffer von der in der angezeigten Matrix in solch einer Weise abweicht, daß benachbarte Datenelemente in der angezeigten Matrix über den ganzen Puffer räumlich verteilt sind, wodurch die Wirkung einer Fehlfunktion eines Ortes des Puffers dementsprechend über die angezeigte Matrix verteilt ist und die so einen kleinen Fehler zu jeder Gruppe einer Vielzahl von Gruppen der angezeigten Matrix beiträgt, die von einem Menschen erkennbar sind.

2. Einheit nach Anspruch 1, bei der der Puffer aus einem herkömmlichen, wortaddressierbaren Speicher mit seinem eigenen, auf Adressen antwortenden Zugriffsmechanismus (12) besteht, der wortseriell durch die Mittel eines Adressengenerators (15) in der Form eines Pseudo-Zufallszahlengenerators arbeitet.

3. Einheit nach Anspruch 2, bei der Mittel vorgesehen sind, um nach Bedarf die Ausgangsbitpositionen des Pseudo-Zufallszahlengenerators den Eingangsbitpositionen des Zugriffsmechanismus zuzuordnen.

4. Einheit nach einem der vorhergehenden Ansprüche, bei der Mittel (16) vorgesehen sind, die auf ein Darstellungssteuersignal zum Invertieren der Ausgangsbits des Puffers reagieren.

**Revendications**

1. Unité d'interface machine/homme pour présenter des données générées par machine à un utilisateur homme sous la forme d'un agencement de représentations d'éléments de données de machine identifiable par l'utilisateur homme seulement en groupes de ces représentations, l'agencement étant regroupé dans une mémoire tampon (11) de données non codé, les données correspondantes étant ou non stockées additionnellement dans ou pour l'unité sous forme codée, et transféré dans sa totalité au côté homme de l'interface dans une relation spatiale fixe des éléments de données de machine, la relation spatiale des éléments de données de machine dans le tampon de données non codées étant différente de celle qui existe dans l'agencement présenté, d'une manière telle que les éléments de données voisins dans l'agencement présenté sont dispersés spatialement dans tout le tampon de sorte que l'effet d'un défaut de fonctionnement d'un emplacement du tampon est dispersé de façon correspondante sur l'agencement présenté, produisant une petite erreur dans chacun d'une pluralité de groupes identifiables par l'homme dans l'agencement présenté.

2. Unité suivant la revendication 1, dans laquelle le tampon est une mémoire adressable par mot usuelle avec son propre mécanisme d'accès répondant à une adresse (12), rendue sérielle par mot au moyen d'un générateur d'adresse (15) sous la forme d'un générateur de nombre pseudo-aléatoire.

3. Unité suivant la revendication 2, dans laquelle des moyens sont prévus pour associer sélectivement les positions de bit de sortie du générateur de nombre pseudo-aléatoire avec les positions de bit d'entrée du mécanisme d'accès.

4. Unité suivant l'une quelconque des revendications précédentes, dans lequel il est prévu des moyens (16) qui répondent à un signal de commande de mode pour inverser les bits de sortie du tampon.

FIG. 1

FIG. 2

FIG. 3

FIG. 4

# FIG. 5